(19) **Europäisches Patentamt**
European Patent Office
Office européen des brevets

(11) **EP 2 865 069 B1**

(12) **EUROPÄISCHE PATENTSCHRIFT**

(45) Veröffentlichungstag und Bekanntmachung des Hinweises auf die Patenterteilung:
**20.09.2017 Patentblatt 2017/38**

(21) Anmeldenummer: **13720345.1**

(22) Anmeldetag: **29.04.2013**

(51) Int Cl.:
**H02J 7/02** (2016.01)  **H02J 7/00** (2006.01)

(86) Internationale Anmeldenummer:
**PCT/EP2013/058834**

(87) Internationale Veröffentlichungsnummer:
**WO 2014/000912 (03.01.2014 Gazette 2014/01)**

(54) **OBJEKTERKENNUNG FÜR EIN ENERGIEÜBERTRAGUNGSSYSTEM**

OBJECT DETECTION FOR AN ENERGY TRANSMISSION SYSTEM

RECONNAISSANCE D'OBJETS POUR UN SYSTÈME DE TRANSFERT D'ÉNERGIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.06.2012 DE 102012210897**

(43) Veröffentlichungstag der Anmeldung:
**29.04.2015 Patentblatt 2015/18**

(73) Patentinhaber: **Robert Bosch GmbH 70442 Stuttgart (DE)**

(72) Erfinder: **MACK, Juergen 73035 Goeppingen (DE)**

(56) Entgegenhaltungen:
**WO-A1-2009/081115 US-A1- 2009 001 932**

EP 2 865 069 B1

**Beschreibung**

Die Erfindung betrifft eine drahtlose Energieübertragung. Insbesondere betrifft die Erfindung ein System und ein Verfahren zur Erfassung eines Objekts auf einer Energieübertragungsstrecke einer drahtlosen Energieübertragung.

Stand der Technik

Ein elektrisches Kleingerät umfasst einen Verbraucher und einen Akkumulator, um einen kabellosen Einsatz zu erlauben. Um den Akkumulator aufzuladen, kann Energie auf drahtlose Weise von einem Netzteil zum Kleingerät übertragen werden, indem ein elektromagnetisches Feld zur Energieübertragung genutzt wird. Dazu umfassen das Netzteil und das Kleingerät jeweils eine Spule, die in geringem Abstand zueinander positionierbar sind und so zusammen im Wesentlichen einen Transformator bilden.

Gerät ein elektrisch leitfähiges Objekt in den Bereich des elektromagnetischen Feldes, so können sich Wirbelströme bilden, die das Objekt erwärmen. Ist das Objekt magnetisierbar, so kann das Objekt auch durch Ummagnetisierungs- bzw. Hystereseverluste erwärmt werden. Die Erwärmung kann beträchtlich sein, sodass eine Betriebssicherheit des Senders oder des Empfängers nicht gewährleistet sein können. Außerdem kann das Objekt Energie aus dem elektromagnetischen Feld entziehen, sodass die Energieübertragung zum Empfänger gestört ist.

Es ist möglich, die Anwesenheit des Objekts zu erfassen, indem der Einfluss des Objekts auf die Induktivität der Senderspule bestimmt wird. Ist das Objekt jedoch relativ klein oder relativ weit von der Sendespule entfernt, so kann eine zuverlässige Erfassung des Objekts schwierig sein.

US 2009/0001932 A1 betrifft eine drahtlose Energieübertragung zur Aufladung eines Geräts mit einem elektrischen Energiespeicher.

Der Erfindung liegt daher die Aufgabe zugrunde, ein System, ein Verfahren und ein Computerprogrammprodukt anzugeben, mittels denen eine möglichst sensible, zuverlässige und trennscharfe Bestimmung des Objekts durchgeführt werden können, um eine Reaktion auf die Anwesenheit des Objekts zu ermöglichen. Die Erfindung löst die angegebenen Probleme mittels eines Energieübertragungssystems, eines Verfahrens und eines Computerprogrammprodukts mit den Merkmalen der unabhängigen Ansprüche. Unteransprüche geben bevorzugte Ausführungsformen wieder.

Offenbarung der Erfindung

Ein Energieübertragungssystem umfasst eine Sendeeinrichtung mit einer Sendespule und eine Empfangseinrichtung mit einer Empfangsspule, wobei die Spulen zur Energieübertragung induktiv miteinander koppelbar sind, sodass zwischen ihnen eine Energieübertragungsstrecke besteht. Das Energieübertragungssystem umfasst weiter eine elektrische Last zur Verbindung mit Anschlüssen der Empfangsspule, eine Erfassungseinrichtung zur Erfassung eines auf die Induktivität der Sendespule hinweisenden elektrischen Parameters, während die elektrische Last mit der Empfangsspule verbunden ist, und eine Bestimmungseinrichtung zur Bestimmung eines Objekts im Bereich der Energieübertragungsstrecke auf der Basis des erfassten Parameters.

Durch das Vorsehen einer elektrischen Last an den Anschlüssen der Empfangsspule wirkt eine in der Empfangsspule induzierte Spannung ähnlich wie eine Stromquelle, sodass die Empfangsspule ein eigenes magnetisches Feld generiert bzw. verstärkt. Befindet sich ein magnetisierbares Objekt im Bereich der Energieübertragungsstrecke, insbesondere nahe an der Empfangsspule, so kann dieses somit einem verstärkten magnetischen Feld ausgesetzt sein. Die Energie, die das Objekt aus dem Magnetfeld aufgrund von Wirbelströmen, Hystereseverlusten oder Ummagnetisierungsverlusten entnimmt, kann dadurch vergrößert sein. Dementsprechend kann ein Effekt des Objekts auf die Induktivität der Sendespule ebenfalls vergrößert sein. Diese Änderung kann verbessert nachweisbar sein, sodass das Objekt mit verbesserter Genauigkeit erfasst werden kann. Außerdem kann auch ein kleineres oder dem magnetischen Feld weniger suszeptibles Objekt mittels des beschriebenen Systems erfassbar sein.

In einer bevorzugten Ausführungsform umfasst die elektrische Last einen Kurzschluss. In jedem Fall ist es bevorzugt, die elektrische Last der Empfangsspule gegenüber einem üblichen Ladebetrieb zu vergrößern, sodass ein erhöhter Strom durch die Empfangsspule fließt, während die elektrische Last mit der Empfangsspule verbunden ist. Ein Kurzschluss kann dazu beitragen, diesen Strom zu maximieren, ohne eine zusätzliche Last vorzusehen.

In der Erfindung umfasst die Empfangsspule mehrere Wicklungen und die elektrische Last ist dazu eingerichtet, mit Anschlüssen nur einer Wicklung der Empfangsspule verbunden zu werden. Dadurch kann das durch die Empfangsspule generierte magnetische Feld verbessert steuerbar sein. Insbesondere kann die mit der elektrischen Last verbindbare Wicklung dazu ausgelegt sein, einen erhöhten Stromdurchfluss ohne Schäden zu erlauben, beispielsweise indem für diese Wicklung ein entsprechend dickerer Draht verwendet wird.

In der Erfindung ist eine Trenneinrichtung zur Isolation der Anschlüsse wenigstens einer der anderen Wicklungen von elektrischen Lasten vorgesehen. Dadurch kann die Bestimmung unter besser kontrollierbaren und besser reproduzierbaren Bedingungen erfolgen. Mittels der Trenneinrichtung kann insbesondere eine Nutzlast von der Empfangsspule getrennt werden, deren Energieversorgung Zweck der Energieübertragung ist. In einer Ausführungsform umfasst das Energieübertragungssystem einen Resonanztransformator, der einen Resonanzkondensator und die Sendespule umfasst, wobei die Erfassungseinrichtung dazu eingerichtet ist, den elektrischen Parameter am Resonanztransformator zu erfassen.

Eine Änderung der Induktivität der Sendespule kann zu einem veränderten Schwingverhalten des Resonanztransformators führen, wobei das Schwingverhalten messtechnisch leicht bestimmbar sein kann.

Der elektrische Parameter kann eines von einem Strom, einer Frequenz, einer Phase oder einer Dämpfung umfassen. Einige dieser Parameter können vorteilhaft an dem oben beschriebenen Resonanztransformator bestimmbar sein. Anstelle der Dämpfung kann auch ein Gütefaktor des Resonanztransformators bestimmt werden

Dabei gilt: $D = \dfrac{1}{Q}$ , wobei D die Dämpfung und Q der Gütefaktor (die Güte) ist.

Ein Verfahren zur Erfassung eines Objekts im Bereich einer induktiven Energieübertragungsstrecke, die zwischen einer Sendespule und einer mit der Sendespule induktiv koppelbaren Empfangsspule besteht, umfasst Schritte des Verbindens einer elektrischen Last mit Anschlüssen der Empfangsspule, des Erfassens eines auf die Induktivität der Sendespule hinweisenden elektrischen Parameters und des Bestimmens des Objekts auf der Basis des erfassten Parameters.

Das Verfahren kann an einem üblichen induktiven Energieübertragungssystem implementierbar sein. Wurde ein Objekt bestimmt, so kann die Energieübertragung gedrosselt oder abgebrochen werden, um eine Überhitzung des Objekts zu vermeiden und eine damit verbundene Unfallgefahr zu senken.

Vorteilhafterweise kann das magnetische Feld, dem das Objekt ausgesetzt ist, seitens der Sendeeinrichtung gesteuert und gleichzeitig, ebenfalls seitens der Sendeeinrichtung, der Effekt eines eventuell vorhandenen Objekts im Bereich der Energieübertragungsstrecke erfasst werden.

In einer bevorzugten Ausführungsform wird das Objekt auf der Basis einer Änderung des elektrischen Parameters während einer Änderung einer Spannung an den Anschlüssen der Sendespule bestimmt. Die Spannung an der Sendespule kann kontinuierlich oder sprunghaft geändert werden, eine periodische Änderung ist ebenfalls möglich. So können Objekte unterschiedlicher Größen bzw. Suszeptibilitäten erfassbar sein. Insbesondere kann es vermieden werden, das Objekt zwecks Bestimmung seines Effekts einem so starken Magnetfeld auszusetzen, dass bereits während der Bestimmung eine gefährliche Überhitzung eintreten kann. In einer anderen Ausführungsform, die mit der letztgenannten Ausführungsform kombinierbar ist, wird das Objekt auf der Basis einer Änderung des elektrischen

Parameters während einer Änderung der elektrischen Last der Empfangsspule bestimmt. Die oben genannten Vorteile können auch bei dieser Ausführungsform erbracht werden.

Ein Computerprogrammprodukt umfasst Programmcodemittel zur Durchführung des beschriebenen Verfahrens, wenn das Computerprogrammprodukt auf einer Verarbeitungseinrichtung abläuft oder auf einem computerlesbaren Datenträger gespeichert ist.

Kurzbeschreibung der Figuren

Die Erfindung wird nun mit Bezug auf die beigefügten Figuren genauer beschrieben, in denen:

Fig. 1     ein System zur drahtlosen Energieübertragung;
Fig. 2     ein Detail des Systems aus Fig. 1;
Fig. 3     ein Ersatzschaltbild für einen magnetischen Fluss in dem in Fig. 2 dargestellten Bereich, und
Fig. 4     ein Ablaufdiagramm eines Verfahrens zur Bestimmung eines Objekts im System von Fig. 1

darstellt.

Genaue Beschreibung von Ausführungsbeispielen

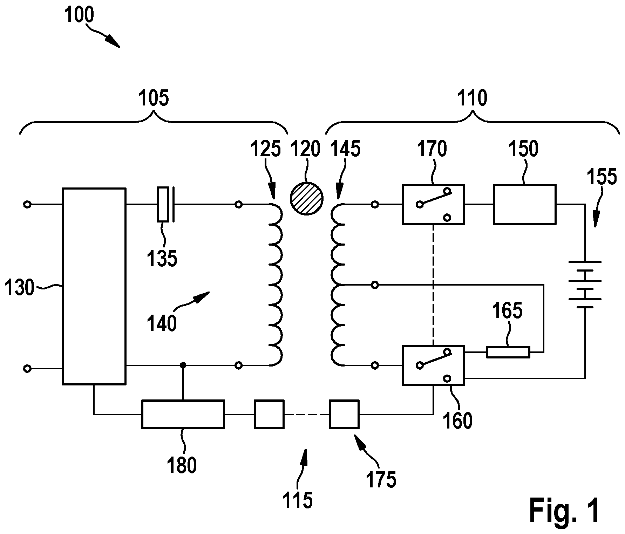

Fig. 1 zeigt ein System 100 zur drahtlosen Energieübertragung. Das System 100 umfasst eine Sendeeinrichtung 105 und eine Empfangseinrichtung 110, zwischen denen eine Energieübertragungsstrecke 115 definiert ist. Im Bereich der Energieübertragungsstrecke 115 kann sich ein Objekt 120 befinden. Das Objekt 120 ist leitfähig oder magnetisierbar, sodass ein sich änderndes magnetisches Feld Wirbelströme, Hystereseverluste oder Ummagnetisierungsverluste in dem Objekt 120 hervorrufen können, die das Objekt 120 erwärmen. Es ist Aufgabe des dargestellten Systems 100, die Existenz des Objekts 120 zu bestimmen.

Die Sendeeinrichtung 105, die beispielsweise von einem Netzteil umfasst sein kann, umfasst eine Sendespule 125 zur Umwandlung eines elektrischen Stroms in einem Magnetfeld im Bereich der Energieübertragungsstrecke 115. Die Sendespule 125 ist mit einer Spannungsquelle 130 verbunden, die einen Wechselstrom bereitstellt. Die Spannungsquelle 130 kann mit einem üblichen Energieversorgungsnetz verbunden sein. Vorzugsweise ist ein Resonanzkondensator 135 mit der Sendespule 125 in Serie mit der Spannungsquelle 130 verbunden, sodass der Resonanzkondensator 135 mit der Sendespule 125 einen Resonanztransformator 140 bildet. Der Resonanzkondensator 135 kann jedoch auch parallel mit der Sendespule 125 verbunden sein. Eine Resonanzfrequenz des Resonanztransformators 140 ist von der Induktivität der Sendespule 125 sowie der Kapazität des Resonanzkondensators 135 abhängig.

Am anderen Ende der Energieübertragungsstrecke 115 liegt eine Empfangsspule 145 der Empfangseinrichtung 110. In bekannten Empfangseinrichtungen ist die Empfangsspule 145 unmittelbar mit einer Nutzlast verbunden, die in der Darstellung von Fig. 1 einen exemplarischen Laderegler 150 für einen Akkumulator 155 umfasst. Im Unterschied dazu ist vorliegend noch eine Schalteinrichtung 160 vorgesehen, um eine elektrische Last 165 mit Anschlüssen der Empfangsspule 145 zu verbinden. Die elektrische Last 165 kann insbesondere eine niederohmige Last oder einen Kurzschluss umfassen. Dabei können in einer Ausführungsform die Nutzlast, hier also der Laderegler 150 und/oder der Akkumulator 155, mit den Anschlüssen der Empfangsspule 145 verbunden bleiben. In einer anderen Ausführungsform wird die Nutzlast von der Empfangsspule 145 wenigstens einseitig getrennt, während die elektrische Last 165 an die Empfangsspule 145 angelegt wird.

In der dargestellten Ausführungsform umfasst die Empfangsspule 145 mehrere Wicklungen, deren Enden als Anschlüsse an der Empfangsspule 145 herausgeführt sind. Die Schalteinrichtung 160 ist dazu eingerichtet, die elektrische Last 165 mit nur einer der Wicklungen der Empfangsspule 145 zu verbinden. Bevorzugterweise ist eine Trenneinrichtung 170 vorgesehen, um eine oder mehrere der verbleibenden Wicklungen von elektrischen Lasten, insbesondere der Nutzlast, zu trennen, während eine andere Wicklung der Empfangsspule 145 mit der elektrischen Last 165 verbunden ist.

Bevorzugterweise ist eine Übertragungseinrichtung 175 vorgesehen, um die Schalteinrichtung 160 und gegebenenfalls auch die Trenneinrichtung 170 seitens der Sendeeinrichtung 105 steuern zu können. Die Übertragungseinrichtung 175 kann drahtgebunden oder drahtlos erfolgen, wobei in einer Ausführungsform eine Informationsübermittlung mittels Variation des magnetischen Feldes im Bereich der Energieübertragungsstrecke 115 vorgesehen ist.

Die Übertragungseinrichtung 175 ist seitens der Sendeeinrichtung 105 mit einer Steuereinrichtung 180 verbunden, die das System 100 steuert, um das Objekt 120 zu bestimmen. Bevorzugterweise ist die Steuereinrichtung 180 auch zur Steuerung eines üblichen Energieübertragungsvorgangs von der Sendeeinrichtung 105 zur Empfangseinrichtung 110 eingerichtet. Dazu kann die Steuereinrichtung 180 mit der Spannungsquelle 130 verbunden sein. Ferner ist die Steuereinrichtung 180 derart mit der Sendespule 125 oder dem Resonanztransformator 140 verknüpft, dass die Steuereinrichtung 180 einen elektrischen Parameter abtasten kann, der auf die Induktivität des Resonanztransformators 140 hinweist. Dieser Parameter kann einen elektrischen Strom, eine elektrische Spannung, eine Frequenz, eine Dämpfung oder einen Gütefaktor an der Sendespule 125 bzw. dem Resonanztransformator 140 umfassen.

Die Steuereinrichtung 180 ist dazu eingerichtet, die Empfangseinrichtung 110 derart anzusteuern, dass die elektrische Last 165 mit der Empfangsspule 145 verbunden wird. In einer bevorzugten Ausführungsform kann gleichzeitig oder darauf folgend die Spannungsquelle 130 dazu angesteuert werden, die Spannung an der Sendespule 125 zu verändern. Das Objekt 120 kann auf der Basis einer Änderung des elektrischen Parameters oder auf der Basis eines absoluten Wertes des elektrischen Parameters, der auf die Induktivität der Sendespule 125 hinweist, bestimmt werden.

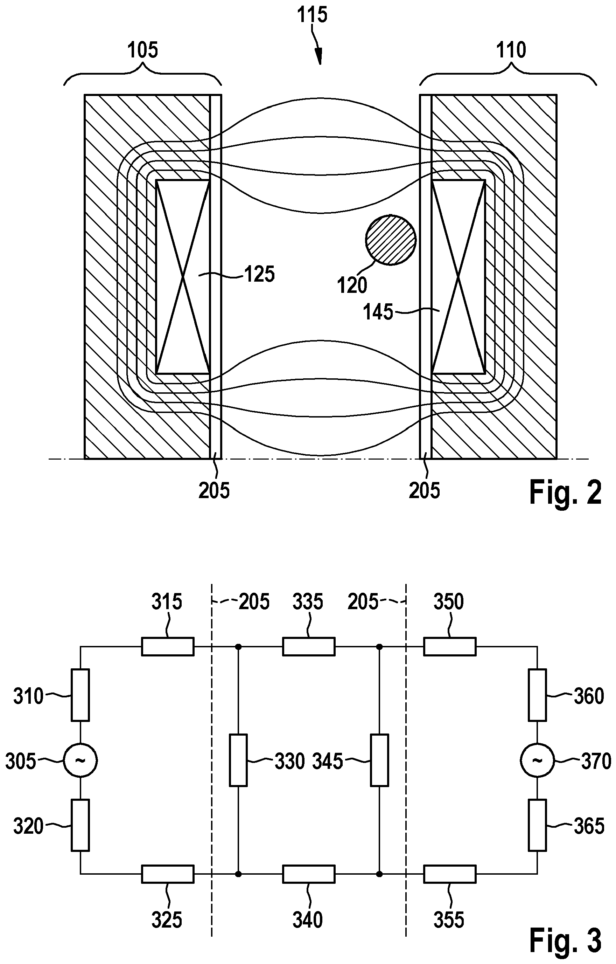

Fig. 2 zeigt einen Ausschnitt aus der Energieübertragungsstrecke 115 aus Fig. 1. Die Darstellung entspricht einem Teil eines exemplarischen physikalischen Aufbaus der Sendespule 125 und der Empfangsspule 145 als Teile der Sendeeinrichtung 105 bzw. der Empfangseinrichtung 110. Zwischen den Spulen 125 und 145 ist die Energieübertragungsstrecke 115 angedeutet. Zwischen den Spulen 125 und 145 sind außerdem magnetische Feldlinien angedeutet. Zwischen Begrenzungen 205, die exemplarisch Abschnitte von Gehäusen der Sendeeinrichtung 105 bzw. der Empfangseinrichtung 110 repräsentieren, ist das Objekt 120 angeordnet.

Fig. 3 zeigt ein magnetisches Ersatzschaltbild für den in Fig. 2 dargestellten Bereich. Dabei stehen Widerstandssymbole für magnetische Widerstände und Spannungsquellen-Symbole für magnetische Durchflutungen. Die Darstellung ist lagerichtig bezüglich der Darstellung von Fig. 2.

Eine erste magnetische Durchflutung 305 repräsentiert die durch die aktiv bestromte Sendespule 125 gebildete magnetische Induktion (B-Feld). Magnetische Widerstände 310, 315, 320 und 325 repräsentieren die Widerstände im horizontalen bzw. vertikalen Bereich um die Sendespule 125 herum. Jenseits des Gehäuses 205 der Sendeeinrichtung 105 repräsentiert ein vertikal verlaufender magnetischer Widerstand 330 magnetische Streuverluste. Magnetische Widerstände 335 und 340 repräsentieren Widerstände in horizontaler Richtung zwischen den Gehäusen 205. Ein magnetischer Widerstand 345 repräsentiert den magnetischen Fluss durch das Objekt 120. Jenseits des zweiten Gehäuses 205, rechts in Fig. 3, sind weitere magnetische Widerstände 350 bis 365, sowie eine zweite magnetische Durchflutung 370 eingetragen, die den Elementen 305 bis 325 entsprechen.

Das dargestellte Ersatzschaltbild gilt nur, wenn sich die Empfangsspule 110 im Leerlauf befindet, also wenn kein elektrischer Verbraucher an die Empfangsspule 110 angeschlossen ist. Durch die elektrische Last wird die in der Empfangsspule 145 induzierte Spannung sofort wieder in ein Magnetfeld umgesetzt, sodass die zweite magnetische Durchflutung 370 als steuerbare Quelle begriffen werden kann, deren magnetischer Fluss proportional zum magnetischen Fluss der ersten magnetischen Durchflutung 305 ist.

Ist die elektrische Last 165 gering, wie es während eines normalen Ladebetriebs des Systems 100 der Fall ist, so ist die zweite magnetische Durchflutung 370 ebenfalls gering. Je größer die elektrische Last 165 ist, desto größer ist die magnetische Durchflutung 370. Mit steigender Durchflutung 370 sinkt die Induktivität der Sendespule 125, was beispielsweise anhand einer steigenden Resonanzfrequenz des Resonanztransformators 140 bestimmt werden kann.

Um die Induktion der Sendespule 125 zu erhöhen, können einerseits der magnetische Fluss der ersten magnetischen Durchflutung 305 erhöht oder andererseits der magnetische Widerstand der zweiten Durchflutung 370 gesenkt werden. Um den magnetischen Fluss zu erhöhen, können die Windungszahl der Sendespule 125 oder der durch die Sendespule 125 fließende Strom erhöht werden. Um den magnetischen Fluss zu erhöhen, kann auch die Empfangsspule 145 elektrisch belastet bzw. kurzgeschlossen werden, wodurch der magnetische Fluss durch das Objekt 120 bzw. durch den magnetischen Widerstand 345 des Objekts 120 insgesamt ansteigt.

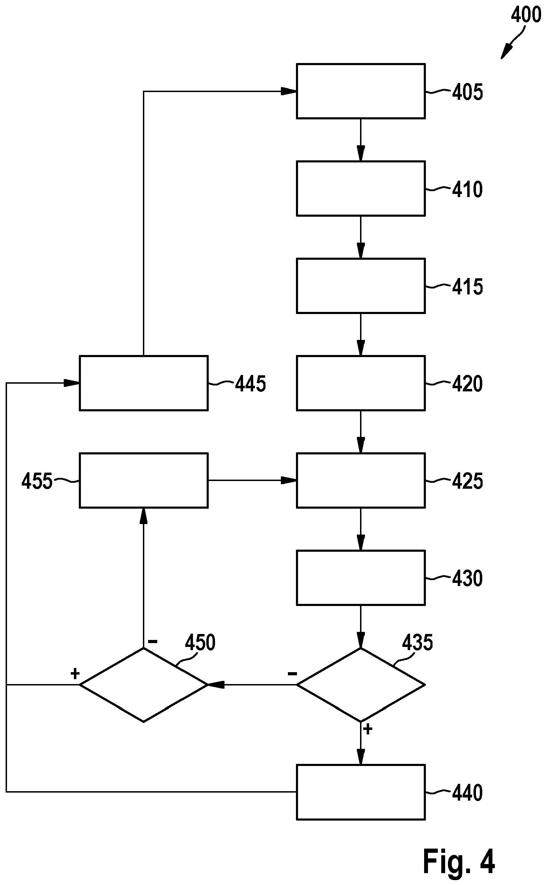

Fig. 4 zeigt ein Ablaufdiagramm eines Verfahrens 400 zur Bestimmung des Objekts 120 im System von Fig. 1. Das Verfahren 400 ist insbesondere zur Steuerung des Systems 100 durch die Steuereinrichtung 180 eingerichtet. In einer Ausführungsform handelt es sich um ein Computerprogrammprodukt zur Steuerung eines programmierbaren Mikrocomputers, der von der Steuereinrichtung 180 umfasst ist.

Das Verfahren beginnt in einem Schritt 405, in dem ein üblicher Ladebetrieb erfolgt, bei dem elektrische Energie mittels eines magnetischen Wechselfelds auf der Energieübertragungsstrecke 115 von der Sendespule 125 zur Empfangsspule 145 transportiert wird.

Um das Objekt 120 zu bestimmen, wird in einem Schritt 410 die Empfangsspule 145 von der Nutzlast 150, 155 getrennt. Dieser Schritt kann auch übersprungen werden.

Anschließend wird die Empfangsspule 145 mit einer elektrischen Last 165 verbunden, sodass der durch die Empfangsspule 145 fließende Strom erhöht wird.

Ferner wird in einem Schritt 420 eine Anregung für die Sendespule 125 bestimmt, indem die Spannungsquelle 130 dazu angesteuert wird, eine vorbestimmte Spannung bereitzustellen. Anschließend wird in einem Schritt 425 die Sendespule 125 angeregt, und zwar vorzugsweise mit einer Wechselspannung. Die Wechselspannung kann durch eine Resonanzfrequenz des Resonanztransformators 140 vorbestimmt sein.

Anschließend wird in einem Schritt 430 ein elektrischer Parameter an der Sendespule 125 bzw. dem Resonanztransformator 140 erfasst. Auf der Basis des erfassten Parameters wird in einem Schritt 435 bestimmt, ob das Objekt 120 im Bereich der Übertragungsstrecke 115 vorhanden ist. Ist dies der Fall, so kann in einem Schritt 440 eine korrespondierende Maßnahme ergriffen werden, beispielsweise eine Verringerung der übertragenen Leistung oder ein Beenden der Energieübertragung. Anschließend wird in einem Schritt 445 die Empfangsspule 145 wieder von der elektrischen Last 165 getrennt und gegebenenfalls mit der ursprünglichen Last, beispielsweise der Nutzlast 150, 155, verbunden. Danach kann das Verfahren zum Schritt 405 zurückkehren und erneut durchlaufen.

Wurde im Schritt 435 bestimmt, dass kein Objekt 120 vorliegt, so wird in einem folgenden Schritt 450 überprüft, ob alle vorgesehenen Anregungen der Sendespule 125 bereits angewendet wurden. Ist dies der Fall, so kann das Objekt 120 nicht bestimmt werden und das Verfahren 400 kehrt über den Schritt 445 zurück zum Schritt 405.

Andernfalls wird in einem Schritt 455 die Anregung geändert, bevor das Verfahren 400 mit dem Schritt 425 fortfährt. Wird nur eine Anregung verwendet, so können die Schritte 450 und 455 wegfallen.

**Patentansprüche**

1. Energieübertragungssystem (100), umfassend

   - eine Sendeeinrichtung (105) mit einer Sendespule (125);
   - eine Empfangseinrichtung (110) mit einer Empfangsspule (145),
   - wobei die Spulen (125, 145) zur Energieübertragung induktiv miteinander koppelbar sind, so dass zwischen ihnen eine Energieübertragungsstrecke (115) besteht,
   - eine elektrische Last (165) zur Verbindung mit Anschlüssen der Empfangsspule (145);
   - eine Erfassungseinrichtung (180) zur Erfassung eines auf die Induktivität der Sendespule (125) hinweisenden elektrischen Parameters, während die elektrische Last mit der Empfangsspule (145) verbunden ist;
   - eine Bestimmungseinrichtung (180) zur Bestimmung eines Objekts (120) im Bereich der Energieübertragungsstrecke (115) auf der Basis des erfassten Parameters,
   - **gekennzeichnet dadurch, dass** die Empfangsspule (145) mehrere Wicklungen umfasst und die elektrische Last (165) zur Verbindung mit Anschlüssen nur einer Wicklung eingerichtet ist; und durch
   - eine Trenneinrichtung (170) zur Isolation der Anschlüsse der anderen Wicklungen von elektrischen Lasten (150, 155).

2. Energieübertragungssystem (100) nach Anspruch 1, wobei die elektrische Last (165) einen Kurzschluss umfasst.

3. Energieübertragungssystem (100) nach einem der vorangehenden Ansprüche, ferner umfassend einen Resonanztransformator (140), der einen Resonanzkondensator (135) und die Sendespule (125) umfasst, wobei die Erfassungseinrichtung (180) dazu eingerichtet ist, den elektrischen Parameter am Resonanztransformator (140) zu erfassen.

4. Energieübertragungssystem (100) nach einem der vorangehenden Ansprüche, wobei der elektrische Parameter eines von einem Strom, einer Frequenz, einer Phase oder einer Dämpfung umfasst.

**5.** Verfahren (400) zur Erfassung eines Objekts im Bereich einer induktiven Energieübertragungsstrecke (115), die zwischen einer Sendespule (125) und einer mit der Sendespule (125) induktiv koppelbaren Empfangsspule (145), die mehrere Wicklungen umfasst, besteht, folgende Schritte umfassend:

- Isolieren (410) der Anschlüsse von Wicklungen der Empfangsspule von elektrischen Lasten;
- Verbinden (415) einer elektrischen Last (165) mit Anschlüssen einer anderen Wicklung der Empfangsspule (145);
- Erfassen (430) eines auf die Induktivität der Sendespule (125) hinweisenden elektrischen Parameters, und
- Bestimmen (435) des Objekts (120) auf der Basis des erfassten Parameters.

**6.** Verfahren (400) nach Anspruch 5, wobei das Objekt (120) auf der Basis einer Änderung des elektrischen Parameters während einer Änderung einer Spannung an Anschlüssen der Sendespule (125) bestimmt wird.

**7.** Verfahren (400) nach einem der Ansprüche 5 oder 6, wobei das Objekt (120) auf der Basis einer Änderung des elektrischen Parameters während einer Änderung der elektrischen Last (165) der Empfangsspule (145) bestimmt wird.

**8.** Computerprogrammprodukt mit Programmcodemitteln zur Durchführung des Verfahrens (400) nach einem der vorangehenden Ansprüche 5 bis 7, wenn das Computerprogrammprodukt auf einer Verarbeitungseinrichtung (180) abläuft oder auf einem computerlesbaren Datenträger gespeichert ist.

**Claims**

**1.** Energy transmission system (100) comprising

- a transmitting device (105) having a transmitting coil (125);
- a receiving device (110) having a receiving coil (145),
- the coils (125, 145) being able to be inductively coupled to one another for the purpose of transmitting energy, with the result that an energy transmission path (115) exists between them,
- an electrical load (165) for connection to connections of the receiving coil (145);
- a recording device (180) for recording an electrical parameter which indicates the inductance of the transmitting coil (125), while the electrical load is connected to the receiving coil (145);
- a determination device (180) for determining an object (120) in the region of the energy transmission path (115) on the basis of the recorded parameter,

**characterized in that** the receiving coil (145) comprises a plurality of windings and the electrical load (165) is set up for connection to connections of only one winding; and
**characterized by**

- an isolating device (170) for isolating the connections of the other windings from electrical loads (150, 155).

**2.** Energy transmission system (100) according to Claim 1, the electrical load (165) comprising a short circuit.

**3.** Energy transmission system (100) according to one of the preceding claims, also comprising a resonant transformer (140) which comprises a resonant capacitor (135) and the transmitting coil (125), the recording device (180) being set up to record the electrical parameter at the resonant transformer (140).

**4.** Energy transmission system (100) according to one of the preceding claims, the electrical parameter comprising one of a current, a frequency, a phase or an attenuation.

**5.** Method (400) for detecting an object in the region of an inductive energy transmission path (115) which exists between a transmitting coil (125) and a receiving coil (145) which can be inductively coupled to the transmitting coil (125) and comprises a plurality of windings, comprising the following steps of:

- isolating (410) the connections of windings of the receiving coil from electrical loads;
- connecting (415) an electrical load (165) to connections of another winding of the receiving coil (145);
- recording (430) an electrical parameter which indicates the inductance of the transmitting coil (125), and
- determining (435) the object (120) on the basis of the recorded parameter.

**6.** Method (400) according to Claim 5, the object (120) being determined on the basis of a change in the electrical parameter during a change in a voltage at connections of the transmitting coil (125).

**7.** Method (400) according to either of Claims 5 and 6, the object (120) being determined on the basis of a change in the electrical parameter during a change in the electrical load (165) of the receiving coil (145).

**8.** Computer program product having program code means for carrying out the method (400) according to one of the preceding Claims 5 to 7 when the computer program product runs on a processing device (180) or is stored on a computer-readable data storage medium.

**Revendications**

1. Système de transmission d'énergie (100), comprenant :

- un dispositif d'émission (105) ayant une bobine d'émission (125) ;
- un dispositif de réception (110) ayant une bobine de réception (145),
- dans lequel les bobines (125, 145) peuvent être couplées l'une à l'autre pour transmettre de l'énergie de l'une à l'autre par induction de manière à ce qu'un trajet de transmission d'énergie (115) soit établi entre celles-ci,
- une charge électrique (165) destinée à être reliée à des bornes de la bobine de réception (145) ;
- un dispositif de détection (180) destiné à détecter un paramètre électrique représentatif de l'inductance de la bobine d'émission (125), alors que la charge électrique est reliée à la bobine de réception (145) ;
- un dispositif de détermination (180) destiné à déterminer un objet (120) se trouvant dans la région du trajet de transmission d'énergie (115) sur la base du paramètre détecté,
- **caractérisé en ce que** la bobine de réception (145) comprend plusieurs enroulements et **en ce que** la charge électrique (165) est conçue pour être reliée aux bornes d'un seul enroulement ; et

par

- un dispositif de séparation (170) destiné à isoler les bornes des autres enroulements vis à vis de charges électriques (150, 155).

2. Système de transmission d'énergie (100) selon la revendication 1, dans lequel la charge électrique (165) comprend un court-circuit.

3. Système de transmission d'énergie (100) selon l'une quelconque des revendications précédentes, comprenant en outre un transformateur à résonance (140) qui comprend un condensateur de résonance (135) et la bobine d'émission (125), dans lequel le dispositif de détection (180) est conçu pour détecter le paramètre électrique au niveau du transformateur à résonance (140).

4. Système de transmission d'énergie (100) selon l'une quelconque des revendications précédentes, dans lequel le paramètre électrique comprend l'un d'un courant, d'une fréquence, d'une phase, ou d'une atténuation.

5. Procédé (400) de détection d'un objet dans la région d'un trajet de transmission d'énergie par induction (115), qui s'étend entre une bobine d'émission (125) et une bobine de réception (145) pouvant être couplée par induction à la bobine d'émission (125) qui comprend plusieurs enroulements, comprenant les étapes consistant à :

- isoler (410) les bornes des enroulements de la bobine de réception vis-à-vis de charges électriques ;
- relier (415) une charge électrique (165) à des bornes d'un autre enroulement de la bobine de réception (145) ;
- détecter (430) un paramètre électrique représentatif de l'inductance de la bobine d'émission (125), et
- déterminer (435) l'objet (120) sur la base du paramètre détecté.

6. Procédé (400) selon la revendication 5, dans lequel l'objet (120) est déterminé sur la base d'une modification du paramètre électrique pendant une modification d'une tension aux bornes de la bobine d'émission (125).

7. Procédé (400) selon l'une quelconque des revendications 5 ou 6, dans lequel l'objet (120) est déterminé sur la base d'une modification du paramètre électrique pendant une modification de la charge électrique (165) de la bobine de réception (145).

8. Produit de programme d'ordinateur comportant des moyens à code de programme destinés à mettre en oeuvre le procédé (400) selon l'une quelconque des revendications 5 à 7 précédentes, lorsque le produit de programme d'ordinateur est exécuté sur un dispositif de traitement (180) ou est stocké sur un support de données lisible par ordinateur.

Fig. 1

**Fig. 2**

**Fig. 3**

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20090001932 A1